# EUROPEAN PATENT APPLICATION

(11) **EP 4 841 561 A1**
(43) Date of publication of application: **18.11.2026**
(21) Application number: 24916579.6
(22) Date of filing: 22.11.2024
(51) Int. Cl.: G06T 7/194, G06T 7/90

(54) **IMAGE PROCESSING METHOD AND APPARATUS, STORAGE MEDIUM, AND ELECTRONIC DEVICE**

(30) Priority: 09.01.2024 CN 202410040860
(71) Applicant: Shenzhen TCL New Technology Co., Ltd, Shenzhen, Guangdong 518052 (CN)
(72) Inventor: LIAO, Siyi, Shenzhen, Guangdong 518052 (CN); YANG, Jianfeng, Shenzhen, Guangdong 518052 (CN); ZHOU, Feng, Shenzhen, Guangdong 518052 (CN); XIE, Renli, Shenzhen, Guangdong 518052 (CN)
(74) Representative: Murgitroyd & Company
(86) International application number: PCT/CN2024/134005
(87) International publication number: WO 2025/148529

(57) **Abstract**

The present disclosure relates to the technical field of image processing, and discloses an image processing method and apparatus, a storage medium, and an electronic device. The method comprises: analyzing an image to be processed, and obtaining a depth-of-field map; on the basis of the depth-of-field map, performing segmentation, and obtaining a foreground image and a background image; on the basis of a foreground color lookup table curve of the foreground image and a background color lookup table curve of the background image, performing correction fusion processing on the foreground image and the background image, and obtaining a processed image. According to the present disclosure, the stability of image processing can be improved.

## Description

This application claims the priority of Chinese Patent Application No. 202410040860.1, entitled "IMAGE PROCESSING METHOD AND APPARATUS, STORAGE MEDIUM, AND ELECTRONIC DEVICE", filed on January 9, 2024, the disclosure of which is incorporated herein by reference in its entirety.

### FIELD OF THE DISCLOSURE

The present disclosure relates to the field of image processing technologies, and in particular, to an image processing method, an apparatus, a storage medium, and an electronic device.

### BACKGROUND

With continuous development of technologies, in various application scenarios, users have increasingly higher requirements for image presentation, and pursue extreme performance in terms of image hierarchy, stereoscopic effect, and picture details.

At present, artificial intelligence (AI) models are usually used to optimize images so as to improve image presentation performance. However, due to randomness of decisions of artificial intelligence (AI) models and stability problems caused by data fluctuations, under different optimization directions, images obtained after optimization processing may suffer from sudden changes such as picture flickering, overall scene becoming brighter or darker, and the like.

### Technical Problem

Therefore, existing image processing methods suffer from poor image processing stability, and are prone to sudden changes in picture processing, thereby affecting user experience.

### SUMMARY

Embodiments of the present disclosure provide a solution that can effectively improve image processing stability, avoid sudden changes in picture processing, and enhance user experience.

Embodiments of the present disclosure provide the following technical solutions.

According to an embodiment of the present disclosure, an image processing method is provided, comprising: analyzing an image to be processed by using a preset image analysis model, to obtain a depth map of the image to be processed; performing foreground-background segmentation on the image to be processed according to the depth map, to obtain a foreground image and a background image; respectively calculating a foreground color lookup table curve corresponding to the foreground image and a background color lookup table curve corresponding to the background image; and performing correction and fusion processing on image data of the foreground image and the background image based on the foreground color lookup table curve and the background color lookup table curve, to obtain a processed image.

In some embodiments of the present disclosure, the respectively calculating the foreground color lookup table curve corresponding to the foreground image and the background color lookup table curve corresponding to the background image comprises: calculating a picture hierarchy mean corresponding to an image to be calculated, wherein the image to be calculated comprises the foreground image or the background image; calculating a color lookup table curve of the image to be calculated based on the picture hierarchy mean and a predetermined picture hierarchy interval, to obtain a calculation result; and obtaining an image color lookup table curve according to the calculation result, wherein the image color lookup table curve comprises the foreground color lookup table curve or the background color lookup table curve.

In some embodiments of the present disclosure, the calculating the picture hierarchy mean corresponding to the image to be calculated comprises: when a scene corresponding to the image to be calculated is a scene in which a target object exists, selecting one of a first picture hierarchy mean and a second picture hierarchy mean that satisfies a predetermined stability condition, to obtain a selected picture hierarchy mean; and obtaining the picture hierarchy mean corresponding to the image to be calculated according to the selected picture hierarchy mean, wherein the first picture hierarchy mean is the picture hierarchy mean of the image to be calculated, and the second picture hierarchy mean is a picture hierarchy mean of a previous-frame image to be calculated.

In some embodiments of the present disclosure, the calculating the picture hierarchy mean corresponding to the image to be calculated comprises: when a scene corresponding to the image to be calculated is a scene in which no target object exists, adjusting depth values of the image to be calculated according to a picture hierarchy adjustment table, to obtain an adjusted depth; and calculating the picture hierarchy mean corresponding to the image to be calculated according to the adjusted depth.

In some embodiments of the present disclosure, the calculating the color lookup table curve of the image to be calculated based on the picture hierarchy mean and the predetermined picture hierarchy interval, to obtain the calculation result comprises: mapping the predetermined picture hierarchy interval by querying a preset lookup table to obtain a first lookup table curve; performing peak method calculation on a focus sub-interval in the predetermined picture hierarchy interval to obtain a second lookup table curve; and performing calculation according to the first lookup table curve, the second lookup table curve, and the picture hierarchy mean, to obtain the calculation result.

In some embodiments of the present disclosure, before calculating the color lookup table curve of the image to be calculated based on the picture hierarchy mean and the predetermined picture hierarchy interval, to obtain the calculation result, the method further comprises: acquiring, according to a scene corresponding to the image to be processed, the predetermined picture hierarchy interval and the focus sub-interval corresponding to the scene, wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

In some embodiments of the present disclosure, the performing calculation according to the first lookup table curve, the second lookup table curve, and the picture hierarchy mean, to obtain the calculation result comprises: calculating a difference between a first interval value and the picture hierarchy mean, to obtain a first difference, wherein the first interval value is a maximum value of the focus sub-interval; multiplying the first difference by a first curve value, to obtain a first product; calculating a difference between the picture hierarchy mean and a second interval value, to obtain a second difference, wherein the second interval value is a minimum value of the focus sub-interval; multiplying the second difference by a second curve value, to obtain a second product, wherein the first curve value and the second curve value are curve values corresponding to a same picture hierarchy in the first lookup table curve and the second lookup table curve, respectively; adding the first product and the second product, to obtain a fused curve value corresponding to the same picture hierarchy; and obtaining the calculation result according to the fused curve value corresponding to the same picture hierarchy.

In some embodiments of the present disclosure, the obtaining the image color lookup table curve according to the calculation result comprises: acquiring image color lookup table curves corresponding to a predetermined number of previous-frame images to be calculated before the image to be processed; and performing mean calculation on the calculation result and the previous-frame image color lookup table curves, to obtain the image color lookup table curve.

In some embodiments of the present disclosure, the performing correction and fusion processing on the image data of the foreground image and the background image based on the foreground color lookup table curve and the background color lookup table curve, to obtain the processed image comprises: performing mapping correction on the image data of the foreground image based on the foreground color lookup table curve, to obtain foreground data; performing mapping correction on the image data of the background image based on the background color lookup table curve, to obtain background data; and fusing the foreground data and the background data, to obtain the processed image corresponding to the image to be processed.

According to an embodiment of the present disclosure, an image processing apparatus is provided. The apparatus comprises: an analysis module, configured to analyze an image to be processed by using a preset image analysis model, to obtain a depth map of the image to be processed; a segmentation module, configured to perform foreground-background segmentation on the image to be processed according to the depth map, to obtain a foreground image and a background image; a calculation module, configured to respectively calculate a foreground color lookup table curve corresponding to the foreground image and a background color lookup table curve corresponding to the background image; and an output module, configured to perform correction and fusion processing on image data of the foreground image and the background image based on the foreground color lookup table curve and the background color lookup table curve, to obtain a processed image.

In some embodiments of the present disclosure, the calculation module is configured to: calculate a picture hierarchy mean corresponding to an image to be calculated, wherein the image to be calculated comprises the foreground image or the background image; calculate a color lookup table curve of the image to be calculated based on the picture hierarchy mean and a predetermined picture hierarchy interval, to obtain a calculation result; and obtain an image color lookup table curve according to the calculation result, wherein the image color lookup table curve comprises the foreground color lookup table curve or the background color lookup table curve.

In some embodiments of the present disclosure, the calculation module is configured to: when a scene corresponding to the image to be calculated is a scene in which a target object exists, select one of a first picture hierarchy mean and a second picture hierarchy mean that satisfies a predetermined stability condition, to obtain a selected picture hierarchy mean; and obtain the picture hierarchy mean corresponding to the image to be calculated according to the selected picture hierarchy mean, wherein the first picture hierarchy mean is the picture hierarchy mean of the image to be calculated, and the second picture hierarchy mean is a picture hierarchy mean of a previous-frame image to be calculated.

In some embodiments of the present disclosure, the calculation module is configured to: when a scene corresponding to the image to be calculated is a scene in which no target object exists, adjust depth values of the image to be calculated according to a picture hierarchy adjustment table, to obtain an adjusted depth; and calculate the picture hierarchy mean corresponding to the image to be calculated according to the adjusted depth.

In some embodiments of the present disclosure, the calculation module is configured to: map the predetermined picture hierarchy interval by querying a preset lookup table to obtain a first lookup table curve; perform peak method calculation on a focus sub-interval in the predetermined picture hierarchy interval to obtain a second lookup table curve; and perform calculation according to the first lookup table curve, the second lookup table curve, and the picture hierarchy mean, to obtain the calculation result.

In some embodiments of the present disclosure, before calculating the color lookup table curve of the image to be calculated based on the picture hierarchy mean and the predetermined picture hierarchy interval, to obtain the calculation result, the apparatus further comprises: a configuration module, configured to acquire, according to a scene corresponding to the image to be processed, the predetermined picture hierarchy interval and a focus sub-interval corresponding to the scene, wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

In some embodiments of the present disclosure, the calculation module is configured to: calculate a difference between a first interval value and the picture hierarchy mean, to obtain a first difference, wherein the first interval value is a maximum value of the focus sub-interval; multiply the first difference by a first curve value, to obtain a first product; calculate a difference between the picture hierarchy mean and a second interval value, to obtain a second difference, wherein the second interval value is a minimum value of the focus sub-interval; multiply the second difference by a second curve value, to obtain a second product, wherein the first curve value and the second curve value are curve values corresponding to a same picture hierarchy in the first lookup table curve and the second lookup table curve, respectively; add the first product and the second product, to obtain a fused curve value corresponding to the same picture hierarchy; and obtain the calculation result according to the fused curve value corresponding to the same picture hierarchy.

In some embodiments of the present disclosure, the calculation module is configured to: acquire image color lookup table curves corresponding to a predetermined number of previous-frame images to be calculated before the image to be processed; and perform mean calculation on the calculation result and the previous-frame image color lookup table curves, to obtain the image color lookup table curve.

In some embodiments of the present disclosure, the output module is configured to: perform mapping correction on image data of the foreground image based on the foreground color lookup table curve, to obtain foreground data; perform mapping correction on image data of the background image based on the background color lookup table curve, to obtain background data; and fuse the foreground data and the background data, to obtain the processed image corresponding to the image to be processed.

According to another embodiment of the present disclosure, a storage medium is provided, on which a computer program is stored, wherein when the computer program is executed by a processor of a computer, the computer is caused to perform the method according to the embodiments of the present disclosure.

According to another embodiment of the present disclosure, an electronic device is provided. The electronic device comprises: a memory, configured to store a computer program; and a processor, configured to read the computer program stored in the memory and execute the method according to the embodiments of the present disclosure.

According to another embodiment of the present disclosure, a computer program product or a computer program is provided. The computer program product or the computer program comprises computer instructions stored in a computer-readable storage medium. A processor of a computer device reads the computer instructions from the computer-readable storage medium and executes the computer instructions, such that the computer device performs the method provided in various optional implementations of the embodiments of the present disclosure.

### Advantageous effects

In the embodiments of the present disclosure, an image to be processed is analyzed by using a preset image analysis model to obtain a depth map of the image to be processed; foreground-background segmentation is performed on the image to be processed according to the depth map to obtain a foreground image and a background image; a foreground color lookup table curve corresponding to the foreground image and a background color lookup table curve corresponding to the background image are respectively calculated; and correction and fusion processing is performed on image data of the foreground image and the background image based on the foreground color lookup table curve and the background color lookup table curve, to obtain a processed image.

In this manner, the depth map of the image to be processed is obtained through analysis by the preset image analysis model, the image to be processed is segmented into the foreground image and the background image according to the depth map, and correction and fusion processing is then performed by respectively calculating corresponding color lookup table curves to obtain the processed image. Therefore, stability problems caused by solely relying on intelligent models for image optimization processing are avoided, overall stability of the image processing process is effectively improved, sudden changes in picture processing are avoided while ensuring optimization of picture presentation performance, and user experience is enhanced.

### BRIEF DESCRIPTION OF THE DRAWINGS

In order to more clearly illustrate the technical solutions in the embodiments of the present disclosure, the drawings required to be used in the description of the embodiments will be briefly introduced below. Obviously, the drawings described below are only some embodiments of the present disclosure, and for a person skilled in the art, other drawings may also be obtained based on these drawings without creative effort.
FIG. 1 illustrates a flowchart of an image processing method according to an embodiment of the present disclosure.
FIG. 2 illustrates a flowchart of a curve calculation method according to an embodiment of the present disclosure.
FIG. 3 illustrates an image processing flowchart according to an embodiment of the present disclosure applied in one scenario.
FIG. 4 illustrates a block diagram of an image processing apparatus according to an embodiment of the present disclosure.
FIG. 5 illustrates a block diagram of an electronic device according to an embodiment of the present disclosure.

### DETAILED DESCRIPTION OF EMBODIMENTS

The present disclosure is further described in detail below with reference to the accompanying drawings and embodiments. It should be understood that the embodiments provided herein are merely for explaining the present disclosure and are not intended to limit the present disclosure. In addition, the embodiments provided below are some, but not all, embodiments of the present disclosure. Technical solutions recorded in the embodiments of the present disclosure may be implemented in any combination without conflict.

It should be noted that, in the embodiments of the present disclosure, the terms "include", "including", or any other variants thereof are intended to cover non-exclusive inclusion, such that a process or apparatus that includes a series of elements not only includes the explicitly listed elements, but also includes other elements not explicitly listed, or elements inherent to such a process or apparatus. Without further limitation, an element defined by the phrase "including one ..." does not exclude the presence of additional related elements in a process including the element or an apparatus including the element (for example, steps in a method or units in an apparatus, wherein the units may be partial circuits, partial processors, partial programs, or software, and the like).

For example, the image processing method provided in the embodiments of the present disclosure includes a series of steps, but is not limited to the explicitly described steps. Similarly, the image processing apparatus provided in the embodiments of the present disclosure includes a series of modules, but is not limited to the explicitly described modules, and may further include modules required for acquiring related information or performing processing based on the information.

Unless otherwise defined, all technical and scientific terms used herein have the same meanings as those commonly understood by persons skilled in the technical field of the present disclosure. The terms used herein are only for the purpose of describing specific embodiments, and are not intended to limit the present disclosure.

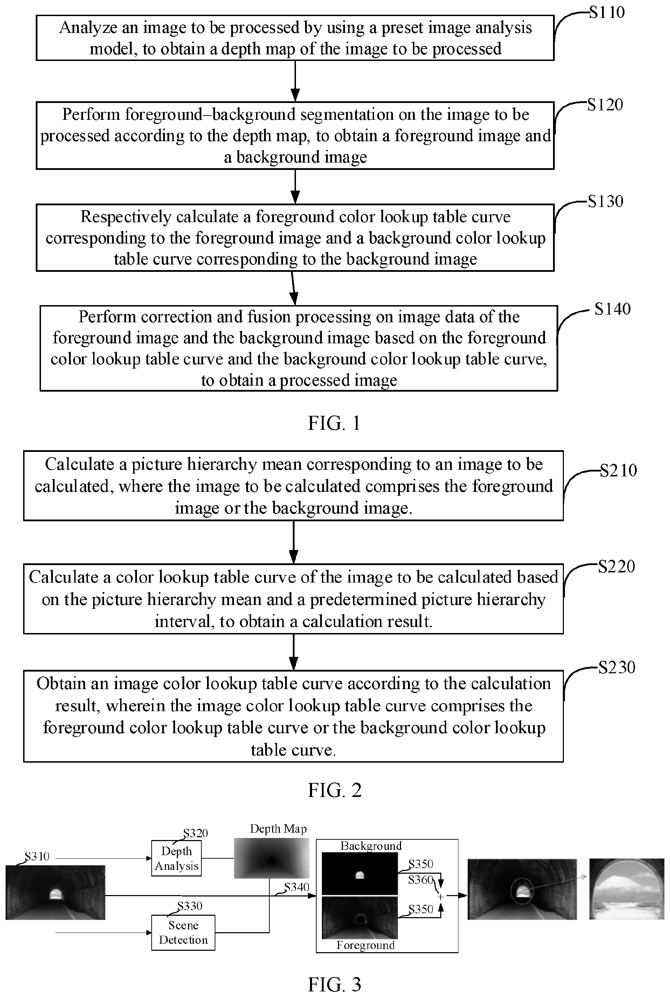

FIG. 1 illustrates a flowchart of an image processing method according to an embodiment of the present disclosure. An execution subject of the image processing method may be any device or server having processing capability. The device may be, for example, a computer, a mobile phone, a smart watch, or a household appliance, and the server may be, for example, a cloud server, a physical server, or a server cluster.

As illustrated in FIG. 1, the image processing method may comprise steps S110 to S140.

Step S110: analyzing an image to be processed by using a preset image analysis model, to obtain a depth map of the image to be processed; Step S120: performing foreground-background segmentation on the image to be processed according to the depth map, to obtain a foreground image and a background image; Step S130: respectively calculating a foreground color lookup table curve corresponding to the foreground image and a background color lookup table curve corresponding to the background image; and Step S140: performing correction and fusion processing on image data of the foreground image and the background image based on the foreground color lookup table curve and the background color lookup table curve, to obtain a processed image.

The preset image analysis model is a pre-trained deep learning model configured to analyze and output a depth map of an image. The image to be processed is input into the preset image analysis model for analysis, and the preset image analysis model outputs the depth map of the image to be processed.

The depth map (BitMap) is a map that marks depth values corresponding to elements (pixel points) in the image to be processed. The depth map (BitMap) comprises depth values corresponding to respective pixel points in the image to be processed, and the depth values have a range of 0 to 255. Depth of field (DoF) may be understood as depth.

Foreground-background segmentation may be performed on the image to be processed according to the depth map to obtain the foreground image and the background image. Specifically, the depth map may be exported as a histogram, and according to the histogram, pixel points belonging to the foreground image and pixel points belonging to the background image in the image to be processed may be accurately segmented, thereby obtaining the foreground image and the background image.

The foreground color lookup table curve is a LUT (Look-Up Table) curve corresponding to the foreground image. Image data of the foreground image may be mapped to new data based on the foreground color lookup table curve, so as to enhance picture presentation performance. The background color lookup table curve is a LUT (Look-Up Table) curve corresponding to the background image. Image data of the background image may be mapped to new data based on the background color lookup table curve, so as to enhance picture presentation performance.

The foreground color lookup table curve corresponding to the foreground image and the background color lookup table curve corresponding to the background image are respectively calculated. Further, based on the foreground color lookup table curve and the background color lookup table curve, image data of the foreground image and the background image are respectively mapped to obtain corrected data, and fusion processing is then performed to obtain a complete processed image with enhanced picture presentation performance, that is, the processed image obtained through correction and fusion processing. Hierarchy, stereoscopic effect, and picture details of the processed image are effectively enhanced, and overall picture sudden changes are avoided.

In this manner, based on steps S110 to S140, the depth map of the image to be processed is obtained through analysis by the preset image analysis model, the image to be processed is segmented into the foreground image and the background image according to the depth map, and correction and fusion processing is then performed by respectively calculating corresponding color lookup table curves to obtain the processed image. Therefore, stability problems caused by solely relying on intelligent models for image optimization processing are avoided, overall stability of the image processing process is effectively improved, sudden changes in picture processing are avoided while ensuring optimization of picture presentation performance, and user experience is enhanced.

The following describes further optional specific embodiments of respective steps performed during image processing in the embodiment of FIG. 1.

In one embodiment, referring to FIG. 2, the respectively calculating the foreground color lookup table curve corresponding to the foreground image and the background color lookup table curve corresponding to the background image may comprise Step S210, Step S220, and Step S230. In Step S210, calculate a picture hierarchy mean corresponding to an image to be calculated, where the image to be calculated comprises the foreground image or the background image. In Step S220, calculate a color lookup table curve of the image to be calculated based on the picture hierarchy mean and a predetermined picture hierarchy interval, to obtain a calculation result. In Step S230, obtain an image color lookup table curve according to the calculation result, wherein the image color lookup table curve comprises the foreground color lookup table curve or the background color lookup table curve.

By respectively using the foreground image and the background image as the image to be calculated, corresponding image color lookup table curves may be obtained. For example, when the foreground image is first used as the image to be calculated, the foreground color lookup table curve may be obtained, and when the background image is then used as the image to be calculated, the background color lookup table curve may be obtained.

First, a picture hierarchy mean (Max_rgb_avg) corresponding to the image to be calculated is calculated. The picture hierarchy mean (Max_rgb_avg) represents an average value of picture hierarchy levels included in the image to be calculated. Specifically, based on the depth map (BitMap) of the image to be processed, pixel data corresponding to different depths of the image to be calculated may be obtained. Mean values of pixel data corresponding to the different depths of the image to be calculated are calculated, and the obtained mean value is the picture hierarchy mean (i.e., a first picture hierarchy mean described below). In some embodiments, the first picture hierarchy mean may be directly used as the picture hierarchy mean corresponding to the image to be calculated. Further, as described in subsequent embodiments, selection may also be performed according to a predetermined stability condition, so as to further improve image processing stability.

Then, the color lookup table curve of the image to be calculated is calculated based on the picture hierarchy mean corresponding to the image to be calculated and the predetermined picture hierarchy interval, to obtain a calculation result. The calculation result is an initially calculated color lookup table curve corresponding to the image to be calculated. A final image color lookup table curve corresponding to the image to be calculated may be obtained according to the calculation result.

In one embodiment, the calculating the picture hierarchy mean corresponding to the image to be calculated may comprise: when a scene corresponding to the image to be calculated is a scene in which a target object exists, selecting one of a first picture hierarchy mean and a second picture hierarchy mean that satisfies a predetermined stability condition, to obtain a selected picture hierarchy mean; and obtaining the picture hierarchy mean corresponding to the image to be calculated according to the selected picture hierarchy mean, where the first picture hierarchy mean is the picture hierarchy mean of the image to be calculated, and the second picture hierarchy mean is a picture hierarchy mean of a previous-frame image to be calculated.

In this embodiment, when a scene corresponding to the image to be calculated is a scene in which a target object exists, for example, when a person exists (Screen_people = 1), one of a first picture hierarchy mean (max_rgb_avg_new) of the image to be calculated in a current frame and a second picture hierarchy mean (max_rgb_avg_old) of the image to be calculated in a previous frame that satisfies the predetermined stability condition is selected to obtain the selected picture hierarchy mean. The picture hierarchy mean (Max_rgb_avg) corresponding to the image to be calculated is then obtained according to the selected picture hierarchy mean. In this way, when a target object exists in the image to be processed, the picture hierarchy mean corresponding to the image to be calculated can be obtained in a stable manner, thereby ensuring stability of image processing.

In one implementation, selecting one of the first picture hierarchy mean (max_rgb_avg_new) and the second picture hierarchy mean (max_rgb_avg_old) that satisfies the predetermined stability condition to obtain the selected picture hierarchy mean may be performed according to the following formula:
max_rgb_avg_new - max_rgb_avg_old | > 15 ? max_rgb_avg_new + 15 :max_rgb_avg_old : max_rgb_avg_old. That is, when an absolute difference between the first picture hierarchy mean (max_rgb_avg_new) and the second picture hierarchy mean (max_rgb_avg_old) is smaller than a predetermined threshold (for example, 15), the second picture hierarchy mean (max_rgb_avg_old) of the previous frame is used as the selected picture hierarchy mean; otherwise, the first picture hierarchy mean (max_rgb_avg_new) is used as the selected picture hierarchy mean.

Further, in one embodiment, the calculating the picture hierarchy mean corresponding to the image to be calculated may comprise: when a scene corresponding to the image to be calculated is a scene in which no target object exists, adjusting depth values of the image to be calculated according to a picture hierarchy adjustment table, to obtain adjusted depth; and calculating the picture hierarchy mean corresponding to the image to be calculated according to the adjusted depth.

In this embodiment, when no target object exists in the image to be processed, for example, when no person exists (Screen_people = 0), pixel data corresponding to different depths of the image to be calculated are adjusted according to a picture hierarchy adjustment table (Avg_gamma), to obtain adjusted data. A mean value of the adjusted data is then calculated as the picture hierarchy mean corresponding to the image to be calculated. In a scene in which no target object exists, the picture hierarchy mean corresponding to the image to be calculated can be obtained in a stable manner through picture hierarchy adjustment, thereby ensuring stability of image processing.

In one embodiment, the calculating the color lookup table curve of the image to be calculated based on the picture hierarchy mean and a predetermined picture hierarchy interval, to obtain the calculation result, may comprise: mapping the predetermined picture hierarchy interval by querying a preset lookup table to obtain a first lookup table curve; performing peak method calculation on a focus sub-interval in the predetermined picture hierarchy interval to obtain a second lookup table curve; and performing calculation according to the first lookup table curve, the second lookup table curve, and the picture hierarchy mean, to obtain the calculation result.

First, the predetermined picture hierarchy interval is a picture hierarchy interval preset for calculating the first lookup table curve (gain_lut1). For example, the predetermined picture hierarchy interval may be (0, 48, 96, 144, 192, 255) or (0, 16, 32, 48, 64, 90, 120, 159, 207, 255).

The first lookup table curve (gain_lut1) may be obtained by a curve lookup method. Specifically, the predetermined picture hierarchy interval may be mapped by querying a preset lookup table to obtain the first lookup table curve (gain_lut1). For example, when the predetermined picture hierarchy interval is (0, 48, 96, 144, 192, 255), mapping values of all pixels in a sub-interval (0, 48) may be obtained as n1 by querying the preset lookup table, mapping values of all pixels in a sub-interval (48, 96) may be obtained as n2, and similarly, mapping values of all values in the predetermined picture hierarchy interval may be obtained. Accordingly, pixels in the predetermined picture hierarchy interval and corresponding mapping values form the first lookup table curve (gain_lut1).

A focus sub-interval is designated from sub-intervals in the predetermined picture hierarchy interval for calculating the second lookup table curve by using a peak method. Peak method calculation is performed on the focus sub-interval in the predetermined picture hierarchy interval to obtain the second lookup table curve. For example, when the focus sub-interval is (96, 144), a grayscale level having a largest number of pixels within the focus sub-interval (i.e., a peak value) is counted. When the peak value is 100, the peak value is mapped to a middle value 128 of a LUT curve range (from 0 to 255). Then, other grayscale levels in the focus sub-interval (96, 144) are sequentially mapped, thereby obtaining the second lookup table curve (gain_lut2).

Then, calculation is performed according to the first lookup table curve, the second lookup table curve, and the picture hierarchy mean, to obtain a calculation result in which the first lookup table curve and the second lookup table curve are fused based on the picture hierarchy mean. The calculation result is an initially calculated color lookup table curve corresponding to the image to be calculated.

In one embodiment, before calculating the color lookup table curve of the image to be calculated based on the picture hierarchy mean and the predetermined picture hierarchy interval, to obtain the calculation result, the method further comprises:
acquiring, according to a scene corresponding to the image to be processed, the predetermined picture hierarchy interval and the focus sub-interval corresponding to the scene, where the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

In this embodiment, the predetermined picture hierarchy interval and the focus sub-interval corresponding to the scene are acquired according to the scene corresponding to the image to be processed. Accordingly, different scenes are distinguished and scene variation is taken into consideration. Color lookup table curve calculation is performed according to the predetermined picture hierarchy interval and the focus sub-interval corresponding to the scene, to obtain the calculation result. The calculation result is used to obtain a final curve for correcting an image, thereby further improving overall image processing stability.

Specifically, the scene may comprise a first scene and a second scene. The first scene is a scene in which a target object exists (for example, a person exists: Screen_people = 1), and the second scene is a scene in which no target object exists (for example, no person exists: Screen_people = 0). A number of sub-intervals in the predetermined picture hierarchy interval corresponding to the first scene is less than a number of sub-intervals in the predetermined picture hierarchy interval corresponding to the second scene. For example, the predetermined picture hierarchy interval corresponding to the first scene may be (0, 48, 96, 144, 192, 255), and a corresponding focus sub-interval may be (96, 144). The predetermined picture hierarchy interval corresponding to the second scene may be (0, 16, 32, 48, 64, 90, 120, 159, 207, 255), and a corresponding focus sub-interval may be (64, 120). In this manner, good picture processing effects can also be obtained in a scene in which no target object exists.

In one embodiment, the performing calculation according to the first lookup table curve, the second lookup table curve, and the picture hierarchy mean, to obtain the calculation result, may specifically comprise: calculating a difference between a first interval value and the picture hierarchy mean, to obtain a first difference, wherein the first interval value is a maximum value of the focus sub-interval; multiplying the first difference by a first curve value, to obtain a first product; calculating a difference between the picture hierarchy mean and a second interval value, to obtain a second difference, wherein the second interval value is a minimum value of the focus sub-interval; multiplying the second difference by a second curve value, to obtain a second product, where the first curve value and the second curve value are curve values corresponding to a same picture hierarchy in the first lookup table curve and the second lookup table curve, respectively; adding the first product and the second product, to obtain a fused curve value corresponding to the same picture hierarchy; and obtaining the calculation result according to the fused curve value corresponding to the same picture hierarchy.

Specifically, the calculation result is obtained according to the following formula: $gain _ lut \left[i\right] = \left(L1-max_rgb_avg\right) \times gain lut 1 \left[i\right] + \left(max_rgb_avg-L2\right) \times gain lut 2 \left[i\right]$
where *L1* is the first interval value, that is, the maximum value of the focus sub-interval. *L2* is the second interval value, that is, the minimum value of the focus sub-interval. *max_rgb_avg* is the picture hierarchy mean.

*gain_lut1* is the first lookup table curve, and *gain_lut2* is the second lookup table curve. *gain_lut1[i]* is the first curve value, that is, a curve value corresponding to picture hierarchy *i* in the first lookup table curve. gain lut2[i] is the second curve value, that is, a curve value corresponding to picture hierarchy i in the second lookup table curve.

A sum of the first product ((L1 - max_rgb_avg) × gain lut1[i])and the second product (max_rgb_avg - L2) × gain lut2[i] ) is a fused curve value gain_lut[i] corresponding to the same picture hierarchy i. According to fused curve values gain_lut[i] corresponding to picture hierarchy values from i = 0 to i = 255, a curve formed by the corresponding gain_lut[i] values is obtained as the calculation result Gain lut.

For example, when the focus sub-interval corresponding to the first scene is (96, 144), fused curve values may be calculated to obtain corresponding fused curve values in the first scene according to the formula: $gain _ lut \left[i\right] = \left(144-max_rgb_avg\right) \times gain lut 1 \left[i\right] + \left(max_rgb_avg-96\right) \times gain lut 2 \left[i\right] .$

For example, when the focus sub-interval corresponding to the second scene is (64, 120), fused curve values may be calculated to obtain corresponding fused curve values in the second scene according to the formula: $gain _ lut \left[i\right] = \left(120-max_rgb_avg\right) \times gain lut 1 \left[i\right] + \left(max_rgb_avg-64\right) \times gain lut 2 \left[i\right] .$

Through the calculation manner in this embodiment, an effective calculation result Gain lut may be obtained. The calculation result Gain lut is used to generate a final curve for correcting an image, thereby further improving overall image processing stability and effectively avoiding sudden changes in image picture processing.

In one embodiment, the obtaining the image color lookup table curve according to the calculation result may comprise: acquiring image color lookup table curves corresponding to a predetermined number of previous-frame images to be processed before the image to be processed; and performing mean calculation on the calculation result and the previous-frame image color lookup table curves, to obtain the image color lookup table curve.

For a current-frame image to be processed, a calculation result (*Gain lut*) corresponding to the image to be calculated may be obtained. Similarly, for a predetermined number (for example, 1 or 9) of previous-frame images to be processed before the image to be processed, corresponding previous-frame image color lookup table curves (*Gain_lut_old*, that is, previous-frame image color lookup table curves) are also obtained.

Mean calculation is performed on the calculation result (*Gain lut*) and the previous-frame image color lookup table curves (*Gain_lut_old*). A mean curve of the two is used as the image color lookup table curve corresponding to the image to be calculated, thereby establishing a smoothing window of a total of a predetermined number (for example, 1 or 9) of frames, such that changes in image processing effects are smoother and more stable.

It can be understood that, in other embodiments, the obtaining the image color lookup table curve according to the calculation result may comprise directly using the calculation result as the obtained image color lookup table curve.

In one embodiment, the performing correction and fusion processing on the image data of the foreground image and the background image based on the foreground color lookup table curve and the background color lookup table curve, to obtain the processed image, may comprise: performing mapping correction on image data of the foreground image based on the foreground color lookup table curve, to obtain foreground data; performing mapping correction on image data of the background image based on the background color lookup table curve, to obtain background data; and fusing the foreground data and the background data, to obtain the processed image corresponding to the image to be processed.

By performing mapping correction on image data of the foreground image based on the foreground color lookup table curve, image data of the foreground image are mapped to corresponding curve values according to the foreground color lookup table curve, thereby obtaining mapped and corrected foreground data. By performing mapping correction on image data of the background image based on the background color lookup table curve, image data of the background image are mapped to corresponding curve values according to the background color lookup table curve, thereby obtaining mapped and corrected background data. Further, the foreground data and the background data are fused into overall image data, thereby obtaining the processed image corresponding to the image to be processed.

To facilitate better implementation of the image processing method provided in the embodiments of the present disclosure, the foregoing embodiments are further described below in conjunction with an image processing flow performed in one scenario. In this scenario, image processing is performed by applying the foregoing embodiments of the present disclosure, wherein meanings of terms are the same as those in the above image processing method, and specific implementation details may refer to descriptions in the method embodiments.

FIG. 3 illustrates an image processing flowchart of an embodiment of the present disclosure applied in one scenario. As illustrated in FIG. 3, the image processing flow in this scenario may comprise steps S310 to S360.

Step S310: acquiring an image to be processed.

Step S320: depth analysis. Specifically, analyzing the image to be processed by using a preset image analysis model, to obtain a depth map of the image to be processed.

Step S330: scene analysis. Specifically, detecting the image to be processed by using a preset scene detection model, to obtain a scene corresponding to the image to be processed. The scene may specifically comprise a first scene and a second scene, wherein the first scene is a scene in which a target object exists (for example, a person exists: Screen_people = 1), and the second scene is a scene in which no target object exists (for example, no person exists: Screen_people = 0).

Step S340: foreground-background segmentation. Specifically, performing foreground-background segmentation on the image to be processed according to the depth map, to obtain a foreground image and a background image.

Step S350: respectively calculating a foreground color lookup table curve corresponding to the foreground image and a background color lookup table curve corresponding to the background image.

The respectively calculating the foreground color lookup table curve corresponding to the foreground image and the background color lookup table curve corresponding to the background image may comprise: calculating a picture hierarchy mean corresponding to an image to be calculated, wherein the image to be calculated comprises the foreground image or the background image; calculating a color lookup table curve of the image to be calculated based on the picture hierarchy mean and a predetermined picture hierarchy interval, to obtain a calculation result; and obtaining an image color lookup table curve according to the calculation result, wherein the image color lookup table curve comprises the foreground color lookup table curve or the background color lookup table curve.

The calculating the picture hierarchy mean corresponding to the image to be calculated may comprise: when a scene corresponding to the image to be calculated is a scene in which a target object exists, selecting one of a first picture hierarchy mean and a second picture hierarchy mean that satisfies a predetermined stability condition, to obtain a selected picture hierarchy mean, and obtaining the picture hierarchy mean corresponding to the image to be calculated according to the selected picture hierarchy mean, wherein the first picture hierarchy mean is the picture hierarchy mean of the image to be calculated, and the second picture hierarchy mean is a picture hierarchy mean of a previous-frame image to be calculated; or when a scene corresponding to the image to be calculated is a scene in which no target object exists, adjusting depth values of the image to be calculated according to a picture hierarchy adjustment table, to obtain adjusted depth, and calculating the picture hierarchy mean corresponding to the image to be calculated according to the adjusted depth.

The calculating the color lookup table curve of the image to be calculated based on the picture hierarchy mean and the predetermined picture hierarchy interval, to obtain the calculation result, may comprise: mapping the predetermined picture hierarchy interval by querying a preset lookup table to obtain a first lookup table curve; performing peak method calculation on a focus sub-interval in the predetermined picture hierarchy interval to obtain a second lookup table curve; and performing calculation according to the first lookup table curve, the second lookup table curve, and the picture hierarchy mean, to obtain the calculation result.

Before calculating the color lookup table curve of the image to be calculated based on the picture hierarchy mean and the predetermined picture hierarchy interval, to obtain the calculation result, the method further comprises: acquiring, according to a scene corresponding to the image to be processed, the predetermined picture hierarchy interval and a focus sub-interval corresponding to the scene, wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

Specifically, the scene may comprise a first scene and a second scene. The first scene is a scene in which a target object exists (for example, a person exists: Screen_people = 1), and the second scene is a scene in which no target object exists (for example, no person exists: Screen_people = 0). A number of sub-intervals in the predetermined picture hierarchy interval corresponding to the first scene is less than a number of sub-intervals in the predetermined picture hierarchy interval corresponding to the second scene. For example, the predetermined picture hierarchy interval corresponding to the first scene may be (0, 48, 96, 144, 192, 255), and a corresponding focus sub-interval may be (96, 144). The predetermined picture hierarchy interval corresponding to the second scene may be (0, 16, 32, 48, 64, 90, 120, 159, 207, 255), and a corresponding focus sub-interval may be (64, 120).

Specifically, calculation may be performed according to the following formula to obtain the calculation result: 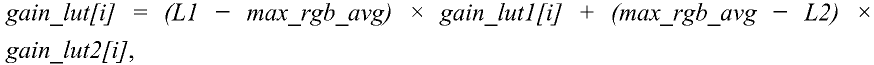 gain_lut[i] = (L1 - max_rgb_avg) × gain_lut1[i] + (max_rgb_avg - L2) × gain_lut2[i], where *L1* is a first interval value, that is, a maximum value of the focus sub-interval. *L2* is a second interval value, that is, a minimum value of the focus sub-interval. *max_rgb_avg* is the picture hierarchy mean. *gain_lut1* is the first lookup table curve, and *gain_lut2* is the second lookup table curve. *gain_lut1[i]* is a first curve value, that is, a curve value corresponding to picture hierarchy *i* in the first lookup table curve, and *gain_lut2[i]* is a second curve value, that is, a curve value corresponding to picture hierarchy *i* in the second lookup table curve. A sum of a first product ((L1 - max_rgb_avg) *×* gain lut1[i]) and a second product ((max_rgb_avg - L2) × gain lut2[i])is a fused curve value *gain_lut[i]* corresponding to the same picture hierarchy *i*. According to fused curve values *gain_lut[i]* corresponding to picture hierarchy values from *i = 0* to *i = 255*, corresponding *gain_lut[i]* values form a curve, thereby obtaining the calculation result *Gain lut*.

The obtaining the image color lookup table curve according to the calculation result may comprise: acquiring image color lookup table curves corresponding to a predetermined number of previous-frame images to be processed before the image to be processed; and performing mean calculation on the calculation result and the previous-frame image color lookup table curves, to obtain the image color lookup table curve.

Step S360: performing correction and fusion processing on image data of the foreground image and the background image based on the foreground color lookup table curve and the background color lookup table curve, to obtain a processed image.

The performing correction and fusion processing on the image data of the foreground image and the background image based on the foreground color lookup table curve and the background color lookup table curve, to obtain the processed image, may comprise: performing mapping correction on image data of the foreground image based on the foreground color lookup table curve, to obtain foreground data; performing mapping correction on image data of the background image based on the background color lookup table curve, to obtain background data; and fusing the foreground data and the background data, to obtain the processed image corresponding to the image to be processed.

In this scenario, by applying the embodiments of the present disclosure to perform image processing, a depth map of an image to be processed is obtained through analysis by a preset image analysis model, the image to be processed is segmented into a foreground image and a background image according to the depth map, and correction and fusion processing is then performed by respectively calculating corresponding color lookup table curves to obtain a processed image. Therefore, stability problems caused by solely relying on intelligent models for image optimization processing are avoided, overall stability of the image processing process is effectively improved, sudden changes in picture processing are avoided while ensuring optimization of picture presentation performance, and user experience is enhanced.

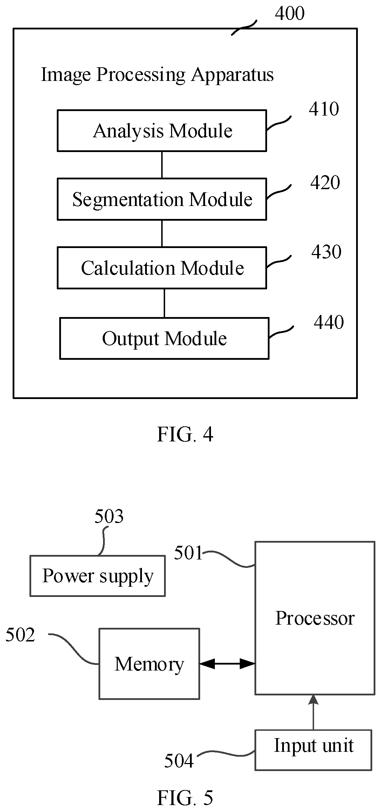

To facilitate better implementation of the image processing method provided in the embodiments of the present disclosure, the embodiments of the present disclosure further provide an image processing apparatus based on the foregoing image processing method. Meanings of terms are the same as those in the above image processing method, and specific implementation details may refer to descriptions in the method embodiments. FIG. 4 illustrates a block diagram of an image processing apparatus according to an embodiment of the present disclosure.

As illustrated in FIG. 4, the image processing apparatus 400 may comprise: an analysis module 410, a segmentation module 420, a calculation module 430, and an output module 440. The analysis module 410 is configured to analyze an image to be processed by using a preset image analysis model, to obtain a depth map of the image to be processed. The segmentation module 420 is configured to perform foreground-background segmentation on the image to be processed according to the depth map, to obtain a foreground image and a background image. The calculation module 430 is configured to respectively calculate a foreground color lookup table curve corresponding to the foreground image and a background color lookup table curve corresponding to the background image. The output module 440 is configured to perform correction and fusion processing on image data of the foreground image and the background image based on the foreground color lookup table curve and the background color lookup table curve, to obtain a processed image.

In some embodiments of the present disclosure, the calculation module is configured to: calculate a picture hierarchy mean corresponding to an image to be calculated, wherein the image to be calculated comprises the foreground image or the background image; calculate a color lookup table curve of the image to be calculated based on the picture hierarchy mean and a predetermined picture hierarchy interval, to obtain a calculation result; and obtain an image color lookup table curve according to the calculation result, wherein the image color lookup table curve comprises the foreground color lookup table curve or the background color lookup table curve.

In some embodiments of the present disclosure, the calculation module is configured to: when a scene corresponding to the image to be calculated is a scene in which a target object exists, select one of a first picture hierarchy mean and a second picture hierarchy mean that satisfies a predetermined stability condition, to obtain a selected picture hierarchy mean; and obtain the picture hierarchy mean corresponding to the image to be calculated according to the selected picture hierarchy mean, wherein the first picture hierarchy mean is the picture hierarchy mean of the image to be calculated, and the second picture hierarchy mean is a picture hierarchy mean of a previous-frame image to be calculated.

In some embodiments of the present disclosure, the calculation module is configured to: when a scene corresponding to the image to be calculated is a scene in which no target object exists, adjust depth values of the image to be calculated according to a picture hierarchy adjustment table, to obtain adjusted depth; and calculate the picture hierarchy mean corresponding to the image to be calculated according to the adjusted depth.

In some embodiments of the present disclosure, the calculation module is configured to: map the predetermined picture hierarchy interval by querying a preset lookup table to obtain a first lookup table curve; perform peak method calculation on a focus sub-interval in the predetermined picture hierarchy interval to obtain a second lookup table curve; and perform calculation according to the first lookup table curve, the second lookup table curve, and the picture hierarchy mean, to obtain the calculation result.

In some embodiments of the present disclosure, before calculating the color lookup table curve of the image to be calculated based on the picture hierarchy mean and the predetermined picture hierarchy interval, to obtain the calculation result, the apparatus further comprises: a configuration module, configured to acquire, according to a scene corresponding to the image to be processed, the predetermined picture hierarchy interval and a focus sub-interval corresponding to the scene, wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

In some embodiments of the present disclosure, the calculation module is configured to: calculate a difference between a first interval value and the picture hierarchy mean, to obtain a first difference, wherein the first interval value is a maximum value of the focus sub-interval; multiply the first difference by a first curve value, to obtain a first product; calculate a difference between the picture hierarchy mean and a second interval value, to obtain a second difference, wherein the second interval value is a minimum value of the focus sub-interval; multiply the second difference by a second curve value, to obtain a second product, wherein the first curve value and the second curve value are curve values corresponding to a same picture hierarchy in the first lookup table curve and the second lookup table curve, respectively; add the first product and the second product, to obtain a fused curve value corresponding to the same picture hierarchy; and obtain the calculation result according to the fused curve value corresponding to the same picture hierarchy.

In some embodiments of the present disclosure, the calculation module is configured to: acquire image color lookup table curves corresponding to a predetermined number of previous-frame images to be calculated before the image to be processed; and perform mean calculation on the calculation result and the previous-frame image color lookup table curves, to obtain the image color lookup table curve.

In some embodiments of the present disclosure, the output module is configured to: perform mapping correction on image data of the foreground image based on the foreground color lookup table curve, to obtain foreground data; perform mapping correction on image data of the background image based on the background color lookup table curve, to obtain background data; and fuse the foreground data and the background data, to obtain the processed image corresponding to the image to be processed.

It should be noted that, although a number of modules or units for performing actions are mentioned in the above detailed description, such division is not mandatory. In practice, according to embodiments of the present disclosure, features and functions of two or more modules or units described above may be embodied in one module or unit. Conversely, features and functions of one module or unit described above may be further divided and embodied by a plurality of modules or units.

In addition, the embodiments of the present disclosure further provide an electronic device. As illustrated in FIG. 5, FIG. 5 is a block diagram of an electronic device according to an embodiment of the present disclosure.

The electronic device may comprise components such as a processor 501 having one or more processing cores, a memory 502 comprising one or more computer-readable storage media, a power supply 503, and an input unit 504. Those skilled in the art may understand that the structure of the electronic device illustrated in FIG. 5 does not constitute a limitation on the electronic device, and the electronic device may comprise more or fewer components than those illustrated, or may combine certain components, or may adopt different component arrangements.

The processor 501 is a control center of the electronic device, and is connected to various parts of the computer device through various interfaces and lines. By running or executing software programs and/or modules stored in the memory 502 and invoking data stored in the memory 502, the processor 501 executes various functions of the computer device and processes data, thereby performing overall control of the electronic device. Optionally, the processor 501 may comprise one or more processing cores. Preferably, the processor 501 may integrate an application processor and a modem processor, wherein the application processor mainly processes an operating system, user interfaces, and application programs, and the modem processor mainly processes wireless communications. It can be understood that the modem processor may alternatively not be integrated into the processor 501.

The memory 502 may be configured to store software programs and modules. The processor 501 executes various functional applications and data processing by running the software programs and modules stored in the memory 502. The memory 502 may mainly comprise a program storage area and a data storage area. The program storage area may store an operating system and application programs required for at least one function (such as a sound playback function, an image playback function, and the like). The data storage area may store data created according to use of the computer device. In addition, the memory 502 may comprise a high-speed random access memory, and may also comprise non-volatile memory, such as one or more disk storage devices, flash memory devices, or other non-volatile solid-state storage devices. Accordingly, the memory 502 may further comprise a memory controller, to provide access of the processor 501 to the memory 502.

The electronic device further comprises a power supply 503 configured to supply power to various components. Preferably, the power supply 503 may be logically connected to the processor 501 through a power management system, so that functions such as charge management, discharge management, and power consumption management are implemented through the power management system. The power supply 503 may further comprise one or more direct current or alternating current power sources, recharging systems, power failure detection circuits, power converters or inverters, power status indicators, or any combination thereof.

The electronic device may further comprise an input unit 504. The input unit 504 may be configured to receive input digital or character information, and generate signal inputs related to user settings and function control, such as keyboard, mouse, joystick, optical, or trackball signal inputs.

Although not illustrated, the electronic device may further comprise a display unit and the like, which will not be described herein for brevity. Specifically, in this embodiment, the processor 501 of the electronic device loads executable files corresponding to one or more computer program processes into the memory 502 according to instructions, and runs the computer programs stored in the memory 502 by the processor 501, so as to implement various functions in the foregoing embodiments of the present disclosure. For example, the processor 501 may execute the following steps:
analyzing an image to be processed by using a preset image analysis model, to obtain a depth map of the image to be processed; performing foreground-background segmentation on the image to be processed according to the depth map, to obtain a foreground image and a background image; respectively calculating a foreground color lookup table curve corresponding to the foreground image and a background color lookup table curve corresponding to the background image; and performing correction and fusion processing on image data of the foreground image and the background image based on the foreground color lookup table curve and the background color lookup table curve, to obtain a processed image.

In some embodiments of the present disclosure, the respectively calculating the foreground color lookup table curve corresponding to the foreground image and the background color lookup table curve corresponding to the background image comprises: calculating a picture hierarchy mean corresponding to an image to be calculated, wherein the image to be calculated comprises the foreground image or the background image; calculating a color lookup table curve of the image to be calculated based on the picture hierarchy mean and a predetermined picture hierarchy interval, to obtain a calculation result; and obtaining an image color lookup table curve according to the calculation result, wherein the image color lookup table curve comprises the foreground color lookup table curve or the background color lookup table curve.

In some embodiments of the present disclosure, the calculating the picture hierarchy mean corresponding to the image to be calculated comprises: when a scene corresponding to the image to be calculated is a scene in which a target object exists, selecting one of a first picture hierarchy mean and a second picture hierarchy mean that satisfies a predetermined stability condition, to obtain a selected picture hierarchy mean; and obtaining the picture hierarchy mean corresponding to the image to be calculated according to the selected picture hierarchy mean, wherein the first picture hierarchy mean is the picture hierarchy mean of the image to be calculated, and the second picture hierarchy mean is a picture hierarchy mean of a previous-frame image to be calculated.

In some embodiments of the present disclosure, the calculating the picture hierarchy mean corresponding to the image to be calculated comprises: when a scene corresponding to the image to be calculated is a scene in which no target object exists, adjusting depth values of the image to be calculated according to a picture hierarchy adjustment table, to obtain adjusted depth; and calculating the picture hierarchy mean corresponding to the image to be calculated according to the adjusted depth.

In some embodiments of the present disclosure, the calculating the color lookup table curve of the image to be calculated based on the picture hierarchy mean and the predetermined picture hierarchy interval, to obtain the calculation result, comprises: mapping the predetermined picture hierarchy interval by querying a preset lookup table to obtain a first lookup table curve; performing peak method calculation on a focus sub-interval in the predetermined picture hierarchy interval to obtain a second lookup table curve; and performing calculation according to the first lookup table curve, the second lookup table curve, and the picture hierarchy mean, to obtain the calculation result.

In some embodiments of the present disclosure, before calculating the color lookup table curve of the image to be calculated based on the picture hierarchy mean and the predetermined picture hierarchy interval, to obtain the calculation result, the method further comprises: acquiring, according to a scene corresponding to the image to be processed, the predetermined picture hierarchy interval and a focus sub-interval corresponding to the scene, wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

In some embodiments of the present disclosure, the performing calculation according to the first lookup table curve, the second lookup table curve, and the picture hierarchy mean to obtain the calculation result comprises: calculating a difference between a first interval value and the picture hierarchy mean, to obtain a first difference, wherein the first interval value is a maximum value of the focus sub-interval; multiplying the first difference by a first curve value, to obtain a first product; calculating a difference between the picture hierarchy mean and a second interval value, to obtain a second difference, wherein the second interval value is a minimum value of the focus sub-interval; multiplying the second difference by a second curve value, to obtain a second product, wherein the first curve value and the second curve value are curve values corresponding to a same picture hierarchy in the first lookup table curve and the second lookup table curve, respectively; adding the first product and the second product, to obtain a fused curve value corresponding to the same picture hierarchy; and obtaining the calculation result according to the fused curve value corresponding to the same picture hierarchy.

In some embodiments of the present disclosure, the obtaining the image color lookup table curve according to the calculation result comprises: acquiring image color lookup table curves corresponding to a predetermined number of previous-frame images to be calculated before the image to be processed; and performing mean calculation on the calculation result and the previous-frame image color lookup table curves, to obtain the image color lookup table curve.

In some embodiments of the present disclosure, the performing correction and fusion processing on image data of the foreground image and the background image based on the foreground color lookup table curve and the background color lookup table curve, to obtain the processed image, comprises: performing mapping correction on image data of the foreground image based on the foreground color lookup table curve, to obtain foreground data; performing mapping correction on image data of the background image based on the background color lookup table curve, to obtain background data; and fusing the foreground data and the background data, to obtain the processed image corresponding to the image to be processed.

Those of ordinary skill in the art may understand that all or part of the steps of the methods in the foregoing embodiments may be implemented by computer programs, or implemented by controlling relevant hardware through computer programs. The computer programs may be stored in a computer-readable storage medium and loaded and executed by a processor.

Accordingly, the embodiments of the present disclosure further provide a storage medium, in which a computer program is stored. When the computer program is loaded and executed by a processor, the processor is caused to perform steps of any one of the methods provided in the embodiments of the present disclosure.

The storage medium may be a computer-readable storage medium, and the storage medium may comprise: a read-only memory (ROM), a random access memory (RAM), a magnetic disk, or an optical disk.

Since the computer program stored in the storage medium can perform steps of any one of the methods provided in the embodiments of the present disclosure, beneficial effects achievable by the methods provided in the embodiments of the present disclosure can be achieved. For details, reference may be made to the foregoing embodiments, and details are not repeated herein.

After considering the specification and practicing the embodiments disclosed herein, those skilled in the art will readily conceive of other embodiments of the present disclosure. The present disclosure is intended to cover any variations, uses, or adaptive changes of the present disclosure. Such variations, uses, or adaptive changes follow the general principles of the present disclosure and include common general knowledge or conventional technical means in the art that are not disclosed herein.

It should be understood that the present disclosure is not limited to the embodiments described above and illustrated in the accompanying drawings, and various modifications and changes may be made without departing from the scope of the present disclosure.

## Claims

1. An image processing method, comprising:
analyzing an image to be processed by using a preset image analysis model, to obtain a depth map of the image to be processed;
performing foreground-background segmentation on the image to be processed according to the depth map, to obtain a foreground image and a background image;
respectively calculating a foreground color lookup table curve corresponding to the foreground image and a background color lookup table curve corresponding to the background image; and
performing correction and fusion processing on image data of the foreground image and the background image based on the foreground color lookup table curve and the background color lookup table curve, to obtain a processed image.

2. The method according to claim 1, wherein the respectively calculating the foreground color lookup table curve corresponding to the foreground image and the background color lookup table curve corresponding to the background image comprises:
calculating a picture hierarchy mean corresponding to an image to be calculated, wherein the image to be calculated comprises the foreground image or the background image;
calculating a color lookup table curve of the image to be calculated based on the picture hierarchy mean and a predetermined picture hierarchy interval, to obtain a calculation result; and
obtaining an image color lookup table curve according to the calculation result, wherein the image color lookup table curve comprises the foreground color lookup table curve or the background color lookup table curve.

3. The method according to claim 2, wherein the calculating the picture hierarchy mean corresponding to the image to be calculated comprises:
when a scene corresponding to the image to be calculated is a scene in which a target object exists, selecting one of a first picture hierarchy mean and a second picture hierarchy mean that satisfies a predetermined stability condition, to obtain a selected picture hierarchy mean; and
obtaining the picture hierarchy mean corresponding to the image to be calculated according to the selected picture hierarchy mean,
wherein the first picture hierarchy mean is the picture hierarchy mean of the image to be calculated, and the second picture hierarchy mean is a picture hierarchy mean of a previous-frame image to be calculated.

4. The method according to claim 2, wherein the calculating the picture hierarchy mean corresponding to the image to be calculated comprises:
when a scene corresponding to the image to be calculated is a scene in which no target object exists, adjusting depth values of the image to be calculated according to a picture hierarchy adjustment table, to obtain an adjusted depth; and
calculating the picture hierarchy mean corresponding to the image to be calculated according to the adjusted depth.

5. The method according to claim 2, wherein the calculating the color lookup table curve of the image to be calculated based on the picture hierarchy mean and the predetermined picture hierarchy interval, to obtain the calculation result comprises:
mapping the predetermined picture hierarchy interval by querying a preset lookup table to obtain a first lookup table curve;
performing peak method calculation on a focus sub-interval in the predetermined picture hierarchy interval to obtain a second lookup table curve; and
performing calculation according to the first lookup table curve, the second lookup table curve, and the picture hierarchy mean, to obtain the calculation result.

6. The method according to claim 5, wherein before calculating the color lookup table curve of the image to be calculated based on the picture hierarchy mean and the predetermined picture hierarchy interval, to obtain the calculation result, the method further comprises:
acquiring, according to a scene corresponding to the image to be processed, the predetermined picture hierarchy interval and the focus sub-interval corresponding to the scene,
wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

7. The method according to claim 5, wherein the performing calculation according to the first lookup table curve, the second lookup table curve, and the picture hierarchy mean, to obtain the calculation result comprises:
calculating a difference between a first interval value and the picture hierarchy mean, to obtain a first difference, wherein the first interval value is a maximum value of the focus sub-interval;
multiplying the first difference by a first curve value, to obtain a first product;
calculating a difference between the picture hierarchy mean and a second interval value, to obtain a second difference, wherein the second interval value is a minimum value of the focus sub-interval;
multiplying the second difference by a second curve value, to obtain a second product, wherein the first curve value and the second curve value are curve values corresponding to a same picture hierarchy in the first lookup table curve and the second lookup table curve, respectively;
adding the first product and the second product, to obtain a fused curve value corresponding to the same picture hierarchy; and
obtaining the calculation result according to the fused curve value corresponding to the same picture hierarchy.

8. The method according to claim 2, wherein the obtaining the image color lookup table curve according to the calculation result comprises:
acquiring image color lookup table curves corresponding to a predetermined number of previous-frame images to be calculated before the image to be processed; and
performing mean calculation on the calculation result and the previous-frame image color lookup table curves, to obtain the image color lookup table curve.

9. The method according to claim 1, wherein the performing correction and fusion processing on the image data of the foreground image and the background image based on the foreground color lookup table curve and the background color lookup table curve, to obtain the processed image comprises:
performing mapping correction on the image data of the foreground image based on the foreground color lookup table curve, to obtain foreground data;
performing mapping correction on the image data of the background image based on the background color lookup table curve, to obtain background data; and
fusing the foreground data and the background data, to obtain the processed image corresponding to the image to be processed.

10. The method according to claim 3, wherein the selecting one of the first picture hierarchy mean and the second picture hierarchy mean that satisfies the predetermined stability condition, to obtain the selected picture hierarchy mean comprises:
when an absolute difference between the first picture hierarchy mean and the second picture hierarchy mean is smaller than a predetermined threshold, using the second picture hierarchy mean of the previous frame as the selected picture hierarchy mean; otherwise, using the first picture hierarchy mean as the selected picture hierarchy mean.

11. The method according to claim 5, wherein the mapping the predetermined picture hierarchy interval by querying the preset lookup table to obtain the first lookup table curve comprises:
querying, from the preset lookup table, mapping values of all pixels in each sub-interval in the predetermined picture hierarchy interval; and
forming the first lookup table curve according to all the pixels in each sub-interval and the mapping values of all the pixels in each sub-interval.

12. The method according to claim 5, wherein the performing peak method calculation on the focus sub-interval in the predetermined picture hierarchy interval to obtain the second lookup table curve comprises:
counting a grayscale level having a largest number of pixels within the focus sub-interval, to obtain a peak value; and
mapping the peak value to a middle value of a LUT curve range, and sequentially mapping other grayscale levels in the focus sub-interval, to obtain the second lookup table curve.

13. An image processing apparatus, comprising:
an analysis module, configured to analyze an image to be processed by using a preset image analysis model, to obtain a depth map of the image to be processed;
a segmentation module, configured to perform foreground-background segmentation on the image to be processed according to the depth map, to obtain a foreground image and a background image;
a calculation module, configured to respectively calculate a foreground color lookup table curve corresponding to the foreground image and a background color lookup table curve corresponding to the background image; and
an output module, configured to perform correction and fusion processing on image data of the foreground image and the background image based on the foreground color lookup table curve and the background color lookup table curve, to obtain a processed image.

14. The apparatus according to claim 13, wherein the calculation module is configured to:
calculate a picture hierarchy mean corresponding to an image to be calculated, wherein the image to be calculated comprises the foreground image or the background image;
calculate a color lookup table curve of the image to be calculated based on the picture hierarchy mean and a predetermined picture hierarchy interval, to obtain a calculation result; and
obtain an image color lookup table curve according to the calculation result, wherein the image color lookup table curve comprises the foreground color lookup table curve or the background color lookup table curve.

15. The apparatus according to claim 14, wherein the calculation module is configured to:
when a scene corresponding to the image to be calculated is a scene in which a target object exists, select one of a first picture hierarchy mean and a second picture hierarchy mean that satisfies a predetermined stability condition, to obtain a selected picture hierarchy mean; and
obtain the picture hierarchy mean corresponding to the image to be calculated according to the selected picture hierarchy mean,
wherein the first picture hierarchy mean is the picture hierarchy mean of the image to be calculated, and the second picture hierarchy mean is a picture hierarchy mean of a previous-frame image to be calculated.

16. The apparatus according to claim 14, wherein the calculation module is configured to:
when a scene corresponding to the image to be calculated is a scene in which no target object exists, adjust depth values of the image to be calculated according to a picture hierarchy adjustment table, to obtain an adjusted depth; and
calculate the picture hierarchy mean corresponding to the image to be calculated according to the adjusted depth.

17. The apparatus according to claim 14, wherein the calculation module is configured to:
map the predetermined picture hierarchy interval by querying a preset lookup table to obtain a first lookup table curve;
perform peak method calculation on a focus sub-interval in the predetermined picture hierarchy interval to obtain a second lookup table curve; and
perform calculation according to the first lookup table curve, the second lookup table curve, and the picture hierarchy mean, to obtain the calculation result.

18. The apparatus according to claim 17, wherein before calculating the color lookup table curve of the image to be calculated based on the picture hierarchy mean and the predetermined picture hierarchy interval, to obtain the calculation result, the apparatus further comprises:
a configuration module, configured to acquire, according to a scene corresponding to the image to be processed, the predetermined picture hierarchy interval and the focus sub-interval corresponding to the scene,
wherein the scene comprises a first scene and a second scene, the first scene is a scene in which a target object exists, the second scene is a scene in which no target object exists, and a number of sub-intervals in the predetermined picture hierarchy interval corresponding to the first scene is less than a number of sub-intervals in the predetermined picture hierarchy interval corresponding to the second scene.

19. A computer-readable storage medium, storing computer program adapted to be loaded by a processor to perform the method according to any one of claims 1 to 12.

20. An electronic device, comprising a processor and a memory storing computer program executable by the processor to perform the method according to any one of claims 1 to 12.
